# EUROPEAN PATENT SPECIFICATION

(11) **EP 2 511 493 B1**
(45) Date of publication and mention of the grant of the patent: **19.04.2017**
(21) Application number: 11801950.4
(22) Date of filing: 18.02.2011
(51) Int. Cl.: F01N 3/08, F01N 3/36

(54) **EXHAUST GAS PURIFYING DEVICE FOR INTERNAL COMBUSTION ENGINE**
ABGASREINIGUNGSSYSTEM FÜR EINEN VERBRENNUNGSMOTOR
PROCEDE DE PURIFICATION DE GAZ D'ECHAPPEMENT POUR MOTEUR A COMBUSTION INTERNE

(43) Date of publication of application: 17.10.2012
(73) Proprietor: TOYOTA JIDOSHA KABUSHIKI KAISHA, Toyota-shi, Aichi-ken, 471-8571 (JP)
(72) Inventor: UMEMOTO, Kazuhiro, Toyota-shi, Aichi-ken 471-8571 (JP); YOSHIDA, Kohei, Toyota-shi, Aichi-ken 471-8571 (JP); INOUE, Mikio, Toyota-shi, Aichi-ken 471-8571 (JP)
(74) Representative: Kuhnen & Wacker
(86) International application number: PCT/JP2011/054207
(87) International publication number: WO 2012/111171

(56) References cited:
- EP-A1- 2 239 432
- EP-A1- 2 402 572
- WO-A2-2009/016822
- JP-A- 2005 113 801
- JP-A- 2006 501 390
- JP-A- 2008 002 451
- US-A1- 2003 101 713

## Description

### Technical Field

The present invention relates to an exhaust purification system of an internal combustion engine.

### Background Art

Known in the art is an internal combustion engine which arranges, in an engine exhaust passage, an NOₓ storage catalyst which stores NOₓ which is contained in exhaust gas when the air-fuel ratio of the inflowing exhaust gas is lean and which releases the stored NOₓ when the air-fuel ratio of the inflowing exhaust gas becomes rich, which arranges, in the engine exhaust passage upstream of the NOₓ storage catalyst, an oxidation catalyst which has an adsorption function, and which feeds hydrocarbons into the engine exhaust passage upstream of the oxidation catalyst to make the air-fuel ratio of the exhaust gas flowing into the NOₓ storage catalyst rich when releasing NOₓ from the NOₓ storage catalyst (for example, see Patent Literature 1).

In this internal combustion engine, the hydrocarbons which are fed when releasing NOₓ from the NOₓ storage catalyst are made gaseous hydrocarbons at the oxidation catalyst, and the gaseous hydrocarbons are fed to the NOₓ storage catalyst. As a result, the NOₓ which is released from the NOₓ storage catalyst is reduced well.

Further, the postpublished Patent Literature 2 discloses that inside an engine exhaust passage, in order from the upstream side, a hydrocarbon feed valve, an oxidation catalyst, and exhaust purification catalyst are arranged. A first NOₓ purification method which lowers the air-fuel ratio of the exhaust gas flowing into the exhaust purification catalyst by a predetermined period while maintaining it lean so as to remove NOₓ without causing NOₓ to be stored in the form of nitrates and a second NOₓ purification method which switches the air-fuel ratio of the exhaust gas flowing into the exhaust purification catalyst from lean to rich by a period longer than the above period so as to remove NOₓ are selectively used in accordance with an operating state of the engine.

### Citation List

### Patent Literature

Patent Literature 1: Japanese Patent No. 3969450
Patent Literature 2: European Patent Application No. EP 2 402 572 A1

### Summary of Invention

### Technical Problem

However, there is the problem that when the NOx storage catalyst becomes a high temperature, the NOₓ purification rate falls.

An object of the present invention is to provide an exhaust purification system of an internal combustion engine which can obtain a high NOₓ purification rate even if the temperature of the exhaust purification catalyst becomes a high temperature and can obtain a high NOₓ purification rate even in an engine operating state where the concentration of NOₓ which is exhausted from the engine becomes higher.

### Solution to Problem

According to the present invention, there is provided an exhaust purification system of an internal combustion engine in which an exhaust purification catalyst for reacting NOₓ which is contained in exhaust gas and reformed hydrocarbons is arranged inside of an engine exhaust passage, the exhaust purification catalyst is comprised of an upstream side catalyst and downstream side catalyst arranged in series, the upstream side catalyst is comprised of a three-way catalyst which has an oxygen storage ability, a precious metal catalyst is carried on the surface of the exhaust gas flow surface of the downstream side catalyst, and a basic exhaust gas flow surface part is formed around the precious metal catalyst, the exhaust purification catalyst has a property of reducing the NOₓ which is contained in exhaust gas if the concentration of hydrocarbons which flow into the exhaust purification catalyst is made to vibrate by within a predetermined range of amplitude and within a predetermined range of period and has a property of being increased in storage amount of NOₓ which is contained in exhaust gas if the vibration period of the hydrocarbon concentration is made longer than the predetermined range, and, at the time of engine operation, the concentration of hydrocarbons which flow into the exhaust purification catalyst is made to vibrate by within the predetermined range of amplitude and within the predetermined range of period to thereby reduce the NOₓ which is contained in the exhaust gas in the exhaust purification catalyst.

### Advantageous Effects of Invention

Even if the temperature of the exhaust purification catalyst becomes a high temperature, a high NOₓ purification rate can be obtained, and even in an engine operating state where the concentration of NOₓ which is exhausted from the engine becomes high, a high NOₓ purification rate can be obtained.

### Brief Description of Drawings

FIG. 1 is an overall view of a compression ignition type internal combustion engine.
FIGS. 2A and 2B are views schematically showing a surface part of a catalyst carrier.
FIG. 3 is a view for explaining an oxidation reaction in an exhaust purification catalyst.
FIG. 4 is a view showing a change of an air-fuel ratio of exhaust gas flowing into an exhaust purification catalyst.
FIG. 5 is a view showing an NOₓ purification rate.
FIG. 6A, 6B and 6C are views for explaining an oxidation reduction reaction in an exhaust purification catalyst.
FIG. 7A and 7B are views for explaining an oxidation reduction reaction in an exhaust purification catalyst.
FIG. 8 is a view showing a change of an air-fuel ratio of exhaust gas flowing into an exhaust purification catalyst.
FIG. 9 is a view of an NOₓ purification rate.
FIG. 10 is a time chart showing a change of an air-fuel ratio of exhaust gas flowing into an exhaust purification catalyst.
FIG. 11 is a time chart showing a change of an air-fuel ratio of exhaust gas flowing into an exhaust purification catalyst.
FIG. 12 is a view showing a relationship between an oxidizing strength of an exhaust purification catalyst and a demanded minimum air-fuel ratio X.
FIG. 13 is a view showing a relationship between an oxygen concentration in exhaust gas and an amplitude ΔH of a hydrocarbon concentration giving the same NOₓ purification rate.
FIG. 14 is a view showing a relationship between an amplitude ΔH of a hydrocarbon concentration and an NOₓ purification rate.
FIG. 15 is a view showing a relationship of a vibration period ΔT of a hydrocarbon concentration and an NOₓ purification rate.
FIG. 16 is a view showing a map of the hydrocarbon feed amount W.
FIG. 17 is a view showing a change in the air-fuel ratio of the exhaust gas flowing to the exhaust purification catalyst etc.
FIG. 18 is a view showing a map of an exhausted NOₓ amount NOXA.
FIG. 19 is a view showing a fuel injection timing.
FIG. 20 is a view showing a map of a hydrocarbon feed amount WR.
FIGS. 21A, 21B, and 21C are views showing a change in the air-fuel ratio of the exhaust gas flowing to the exhaust purification catalyst etc.
FIG. 22 is a flow chart for NOₓ purification control.

### Description of Embodiments

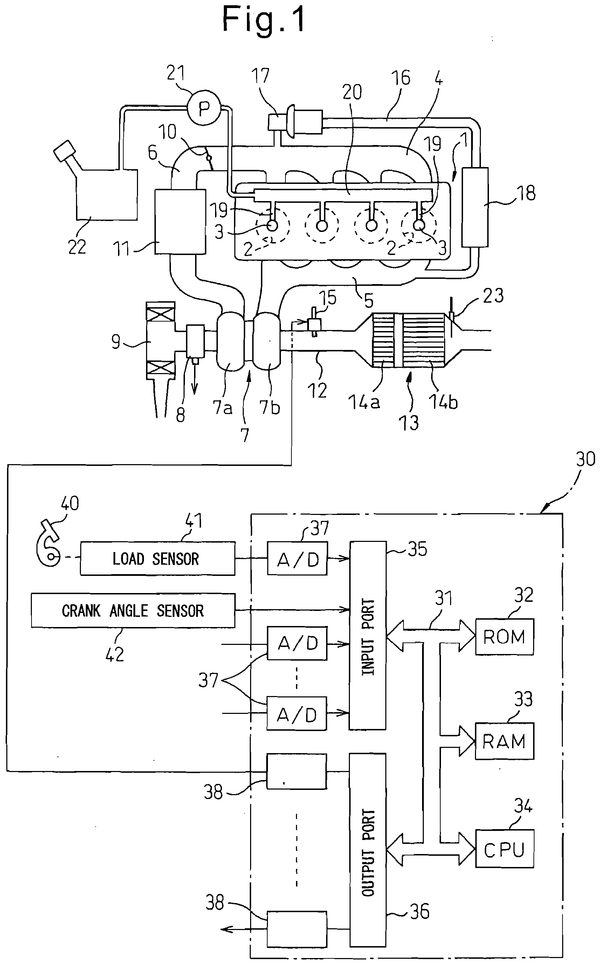

FIG. 1 is an overall view of a compression ignition type internal combustion engine.

Referring to FIG. 1, 1 indicates an engine body, 2 a combustion chamber of each cylinder, 3 an electronically controlled fuel injector for injecting fuel into each combustion chamber 2, 4 an intake manifold, and 5 an exhaust manifold. The intake manifold 4 is connected through an intake duct 6 to an outlet of a compressor 7a of an exhaust turbocharger 7, while an inlet of the compressor 7a is connected through an intake air amount detector 8 to an air cleaner 9. Inside the intake duct 6, a throttle valve 10 driven by a step motor is arranged. Furthermore, around the intake duct 6, a cooling device 11 is arranged for cooling the intake air which flows through the inside of the intake duct 6. In the embodiment shown in FIG. 1, the engine cooling water is guided to the inside of the cooling device 11 where the engine cooling water is used to cool the intake air.

On the other hand, the exhaust manifold 5 is connected to an inlet of an exhaust turbine 7b of the exhaust turbocharger 7. An outlet of the exhaust turbine 7b is connected through an exhaust pipe 12 to the exhaust purification catalyst 13. As shown in FIG. 1, this exhaust purification catalyst 13 is comprised of an upstream-side catalyst 14a and a downstream-side catalyst 14b arranged in series at an interval from each other.

Inside the exhaust pipe 12 upstream of the exhaust purification catalyst 13, a hydrocarbon feed valve 15 is arranged for feeding hydrocarbons comprised of diesel oil or other fuel used as fuel for a compression ignition type internal combustion engine. In the embodiment shown in FIG. 1, diesel oil is used as the hydrocarbons which are fed from the hydrocarbon feed valve 15. Note that, the present invention can also be applied to a spark ignition type internal combustion engine in which fuel is burned under a lean air-fuel ratio. In this case, from the hydrocarbon feed valve 15, hydrocarbons comprised of gasoline or other fuel used as fuel of a spark ignition type internal combustion engine are fed.

On the other hand, the exhaust manifold 5 and the intake manifold 4 are connected with each other through an exhaust gas recirculation (hereinafter referred to as an "EGR") passage 16. Inside the EGR passage 16, an electronically controlled EGR control valve 17 is arranged. Further, around the EGR passage 16, a cooling device 18 is arranged for cooling EGR gas flowing through the inside of the EGR passage 16. In the embodiment shown in FIG. 1, the engine cooling water is guided to the inside of the cooling device 18 where the engine cooling water is used to cool the EGR gas. On the other hand, each fuel injector 3 is connected through a fuel feed tube 19 to a common rail 20. This common rail 20 is connected through an electronically controlled variable discharge fuel pump 21 to a fuel tank 22. The fuel which is stored inside of the fuel tank 22 is fed by the fuel pump 21 to the inside of the common rail 20. The fuel which is fed to the inside of the common rail 20 is fed through each fuel feed tube 19 to the fuel injector 3.

An electronic control unit 30 is comprised of a digital computer provided with a ROM (read only memory) 32, a RAM (random access memory) 33, a CPU (microprocessor) 34, an input port 35, and an output port 36, which are connected with each other by a bidirectional bus 31. Downstream of the downstream-side catalyst 14b, a temperature sensor 23 is attached for estimating a temperature of the downstream-side catalyst 14b. The output signals of this temperature sensor 23 and intake air amount detector 8 are input through respectively corresponding AD converters 37 to the input port 35. Further, an accelerator pedal 40 has a load sensor 41 connected to it which generates an output voltage proportional to the amount of depression L of the accelerator pedal 40. The output voltage of the load sensor 41 is input through a corresponding AD converter 37 to the input port 35. Furthermore, at the input port 35, a crank angle sensor 42 is connected which generates an output pulse every time a crankshaft rotates by, for example, 15°. On the other hand, the output port 36 is connected through corresponding drive circuits 38 to each fuel injector 3, step motor for driving the throttle valve 10, hydrocarbon feed valve 15, EGR control valve 17, and fuel pump 21.

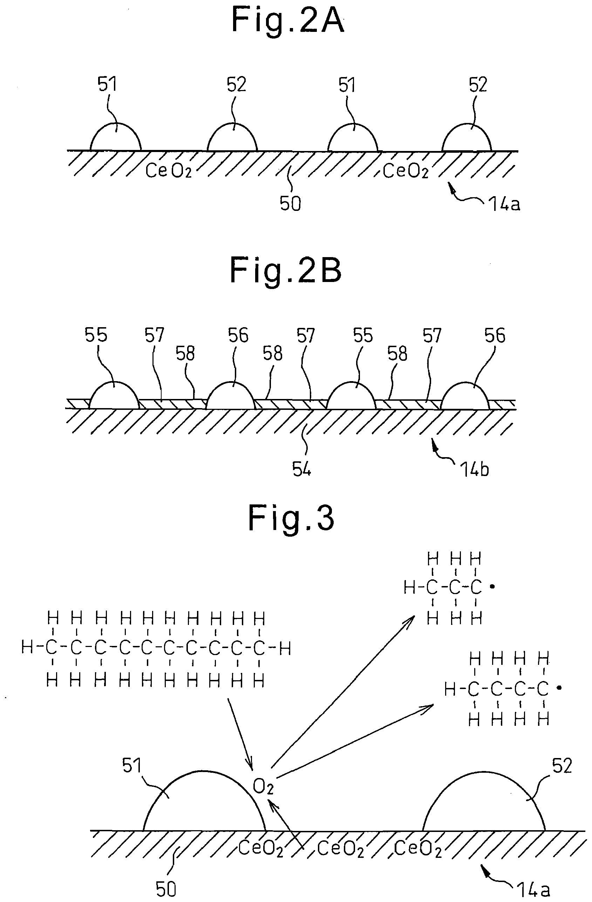

In the present invention, the upstream side catalyst 14a is comprised of a three-way catalyst which has an oxygen storage ability. This three-way catalyst has the function of simultaneously reducing the HC, CO, and NOₓ which are contained in the exhaust gas when the air-fuel ratio of the exhaust gas which flows into the three-way catalyst is controlled to the stoichiometric air-fuel ratio by feedback control. FIG. 2A schematically shows the surface part of the catalyst carrier which is carried on the substrate of this three-way catalyst, that is, the upstream side catalyst 14a. As shown in FIG. 2A, on the catalyst carrier 50 comprised of for example alumina of this upstream side catalyst 14a, precious metal catalysts 51 and 52 are carried. In the example shown in FIG. 2A, the precious metal catalyst 51 is comprised of platinum Pt while the precious metal catalyst 52 is comprised of rhodium Rh.

On the other hand, in the example shown in FIG. 2A, the catalyst carrier 50 of the upstream side catalyst 14a contains cerium Ce. This cerium Ce takes in oxygen and takes the form of ceria CeO₂ under an oxygen rich oxidizing atmosphere while releases oxygen and takes the form of Ce₂O₃ under a reducing atmosphere. That is, the catalyst carrier 50 has an oxygen absorption and release function such that the catalyst carrier 50 absorbs oxygen under an oxidizing atmosphere and releases oxygen under a reducing atmosphere. When the catalyst carrier 50 does not have such an oxygen absorption and release function, if the oxygen concentration in the exhaust gas is decreased, the oxidizing strength of the upstream side catalyst 14a weakens.

As opposed to this, if the catalyst carrier 50 has an oxygen absorption and release function, if the oxygen concentration of the exhaust gas becomes smaller, oxygen is released from the catalyst carrier 50. Further, this oxygen is extremely high in activity. Therefore, when the catalyst carrier 50 has an oxygen absorption and release function, that is, when the upstream side catalyst 14a has an oxygen storage ability, even if the air-fuel ratio of the exhaust gas becomes rich, the upstream side catalyst 14a has a high oxidizing strength.

On the other hand, FIG. 2B schematically shows the surface part of the catalyst carrier carried on the substrate of the downstream-side catalyst 14b. In the downstream-side catalyst 14b, as shown in FIG. 2B, for example, precious metal catalysts 55 and 56 are carried on a catalyst carrier 54 comprised of alumina. Furthermore, on this catalyst carrier 54, a basic layer 57 is formed which includes at least one element selected from potassium K, sodium Na, cesium Cs, or another such alkali metal, barium Ba, calcium Ca, or another such alkali earth metal, a lanthanoid or another such rare earth and silver Ag, copper Cu, iron Fe, iridium Ir, or another metal able to donate electrons to NOₓ. The exhaust gas flows along the top of the catalyst carrier 54, so the precious metal catalysts 55 and 56 can be said to be carried on the exhaust gas flow surface of the downstream-side catalyst 14b. Further, the surface of the basic layer 57 exhibits basicity, so the surface of the basic layer 57 is called the basic exhaust gas flow surface part 58.

On the other hand, in FIG. 2B, the precious metal catalyst 55 is comprised of platinum Pt, while the precious metal catalyst 56 is comprised of rhodium Rh. That is, the precious metal catalysts 55 and 56 which are carried on the catalyst carrier 54 are comprised of platinum Pt and rhodium Rh. Note that, on the catalyst carrier 54 of the downstream-side catalyst 14b, in addition to platinum Pt and rhodium Rh, palladium Pd may be further carried or, instead of rhodium Rh, palladium Pd may be carried. That is, the precious metal catalysts 55 and 56 which are carried on the catalyst carrier 54 are comprised of platinum Pt and at least one of rhodium Rh and palladium Pd.

If hydrocarbons are injected from the hydrocarbon feed valve 15 into the exhaust gas, the hydrocarbons are reformed at the upstream-side catalyst 14a. That is, the hydrocarbons HC which are injected from the hydrocarbon feed valve 15 become radical hydrocarbons HC with a small carbon number due to the catalyst 51. In the present invention, at this time, the reformed hydrocarbons are used to remove the NOₓ at the downstream-side catalyst 14b. Note that, if, at this time, the catalyst carrier 50 of the upstream side catalyst 14a becomes a reducing atmosphere, as illustrated in FIG. 3, oxygen is released from the catalyst carrier 50. This released oxygen is used to reform the hydrocarbons to radical hydrocarbons with a small carbon number.

Further, even if injecting fuel, that is, hydrocarbons, from the fuel injector 3 into the combustion chamber 2 in the latter half of an expansion stroke or during an exhaust stroke, the hydrocarbons are reformed in the combustion chamber 2 or at the upstream side catalyst 14a, so the NOₓ which is contained in the exhaust gas is removed by the reformed hydrocarbons. Therefore, in the present invention, instead of feeding hydrocarbons from the hydrocarbon feed valve 15 to the inside of the engine exhaust passage, it is also possible to feed hydrocarbons into the combustion chamber 2 at the latter half of an expansion stroke or during an exhaust stroke. In this way, in the present invention, it is also possible to feed hydrocarbons into the combustion chamber 2, but below the present invention will be explained with reference to the case of injecting hydrocarbons from the hydrocarbon feed valve 15 to the inside of the engine exhaust passage.

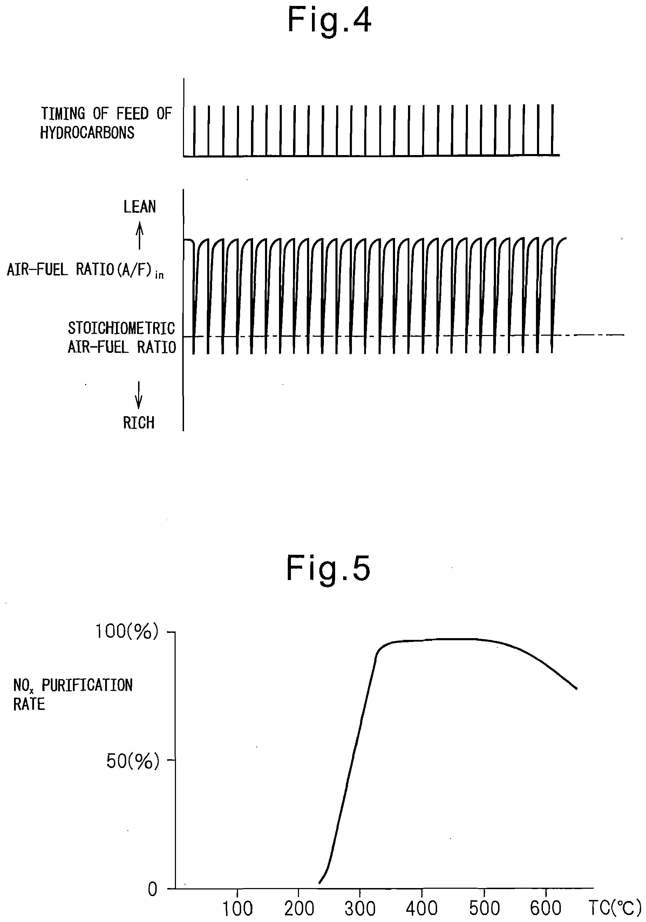

FIG. 4 shows the timing of feeding hydrocarbons from the hydrocarbon feed valve 15 and the changes in the air-fuel ratio (A/F)in of the exhaust gas flowing into the exhaust purification catalyst 13. Note that, the changes in the air-fuel ratio (A/F)in depend on the change in concentration of the hydrocarbons in the exhaust gas which flows into the exhaust purification catalyst 13, so it can be said that the change in the air-fuel ratio (A/F)in shown in FIG. 4 expresses the change in concentration of the hydrocarbons. However, if the hydrocarbon concentration becomes higher, the air-fuel ratio (A/F)in becomes smaller, so, in FIG. 4, the more to the rich side the air-fuel ratio (A/F)in becomes, the higher the hydrocarbon concentration.

FIG. 5 shows the NOₓ purification rate by the exhaust purification catalyst 13 with respect to the catalyst temperatures TC of the exhaust purification catalyst 13 when periodically making the concentration of hydrocarbons flowing into the exhaust purification catalyst 13 change so as to, as shown in FIG. 4, make the air-fuel ratio (A/F) in of the exhaust gas flowing to the exhaust purification catalyst 13 change. The inventors engaged in research relating to NOₓ purification for a long time. In the process of research, they learned that if making the concentration of hydrocarbons flowing into the exhaust purification catalyst 13 vibrate by within a predetermined range of amplitude and within a predetermined range of period, as shown in FIG. 5, an extremely high NOₓ purification rate is obtained even in a 400°C or higher high temperature region.

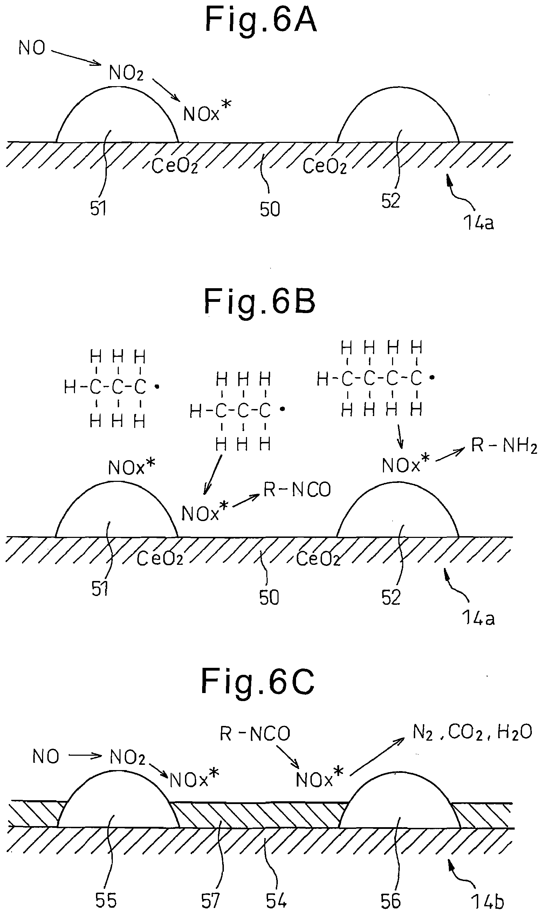

Furthermore, at this time, a large amount of reducing intermediate containing nitrogen and hydrocarbons is produced inside the upstream-side catalyst 14a. It is learned that this reducing intermediate plays a central role in obtaining a high NOₓ purification rate. Next, this will be explained with reference to FIGS. 6A, 6B, and 6C. Note that, FIGS. 6A and 6B schematically show the surface part of the catalyst carrier 50 of the upstream-side catalyst 14a, while FIG. 6C schematically shows the surface part of the catalyst carrier 54 of the downstream-side catalyst 14b. These FIGS. 6A, 6B, and 6C show the reaction which is presumed to occur when the concentration of hydrocarbons flowing into the exhaust purification catalyst 13 is made to vibrate by within a predetermined range of amplitude and within a predetermined range of period.

FIG. 6A shows when the concentration of hydrocarbons flowing into the upstream-side catalyst 14a is low, while FIG. 6B shows when hydrocarbons are fed from the hydrocarbon feed valve 15 and the concentration of hydrocarbons flowing into the upstream-side catalyst 14a becomes high.

Now, as will be understood from FIG. 4, the air-fuel ratio of the exhaust gas which flows into the exhaust purification catalyst 13 is maintained lean except for an instant, so the exhaust gas which flows into the upstream-side catalyst 14a normally becomes a state of oxygen excess. Therefore, the NO which is contained in the exhaust gas, as shown in FIG. 6A, is oxidized on the platinum 51 and becomes NO₂. Next, this NO₂ is further oxidized and becomes NO₃. Further part of the NO₂ becomes NO₂⁻. In this case, the amount of production of NO₃ is far greater than the amount of production of NO₂⁻. Therefore, on the platinum Pt 51, a large amount of NO₃ and a small amount of NO₂⁻ are produced. These NO₃ and NO₂⁻ are strong in activity. Below, these NO₃ and NO₂⁻ will be referred to as the active NOₓ*.

On the other hand, if hydrocarbons are fed from the hydrocarbon feed valve 15, as shown in FIG. 3, the hydrocarbons are reformed and become radical inside of the upstream-side catalyst 14a. As a result, as shown in FIG. 6B, the hydrocarbon concentration around the active NOₓ^{*} becomes higher. If the hydrocarbon concentration around the active NOₓ^{*} becomes higher, as shown in FIG. 6B, the active NOₓ^{*} reacts on the platinum 51 with the radical hydrocarbons HC whereby a reducing intermediate is produced.

Note that, at this time, the first produced reducing intermediate is considered to be a nitro compound R-NO₂. If this nitro compound R-NO₂ is produced, the result becomes a nitrile compound R-CN, but this nitrile compound R-CN can only survive for an instant in this state, so immediately becomes an isocyanate compound R-NCO. This isocyanate compound R-NCO, if hydrolyzed, becomes the amine compound R-NH₂. However, in this case, what is hydrolyzed is considered to be part of the isocyanate compound R-NCO. Therefore, as shown in FIG. 6B, the majority of the reducing intermediate which is produced is believed to be the isocyanate compound R-NCO and amine compound R-NH₂. The reducing intermediate R-NCO or R-NH₂ which is produced at the upstream-side catalyst 14a is sent to the downstream-side catalyst 14b.

In this way, a large amount of reducing intermediate is sent from the upstream-side catalyst 14a to the downstream-side catalyst 14b. Further, part of the active NOₓ^{*} which is produced at the upstream side catalyst 14a flows out from the upstream side catalyst 14a and is sent into the downstream side catalyst 14b. Further, on the downstream side catalyst 14b, as shown in FIG. 6C, active NOₓ* is produced. The active NOₓ* is held on the surface of the basic layer 57 of the downstream side catalyst 14b by sticking or adsorption.

In this regard, after the active NO_{X}* is held on the surface of the basic layer 57 in this way or after the active NO_{X}* is produced, if the state where the oxygen concentration around the active NO_{X}* is high continues for a certain time or more, the active NO_{X}* will be oxidized and be absorbed in the basic layer 57 in the form of nitrate ions NO₃⁻. However, if, before this certain time elapses, the concentration of hydrocarbons which flow into the upstream side catalyst 14a is made high and the reducing intermediate is sent in, as shown in FIG. 6C, the active NOₓ^{*} reacts with the reducing intermediate R-NCO or R-NH₂ and becomes N₂, CO₂, and H₂O, therefore the NOₓ is removed.

In this way, in the exhaust purification catalyst 13, by making the concentration of hydrocarbons flowing into the exhaust purification catalyst 13 temporarily higher, a reducing intermediate is produced. The produced reducing intermediate is made to react with the active NO_{X}*, whereby the NOₓ is removed. That is, in order for the exhaust purification catalyst 13 to remove the NOₓ, the concentration of hydrocarbons flowing into the exhaust purification catalyst 13 has to be periodically changed.

Of course, in this case, it is necessary to raise the concentration of hydrocarbons to a concentration sufficiently high for producing the reducing intermediate. That is, it is necessary to make the concentration of hydrocarbons flowing into the exhaust purification catalyst 13 vibrate by within a predetermined range of amplitude.

On the other hand, if lengthening the feed period of the hydrocarbons, the time in which the oxygen concentration becomes higher becomes longer in the period after the hydrocarbons are fed until the hydrocarbons are next fed. Therefore, the active NO_{X}* is absorbed in the basic layer 57 in the form of nitrates without producing a reducing intermediate. To avoid this, it is necessary to make the concentration of hydrocarbons flowing into the exhaust purification catalyst 13 vibrate by within a predetermined range of period. Incidentally, in the example shown in FIG. 4, the injection interval is made 3 seconds.

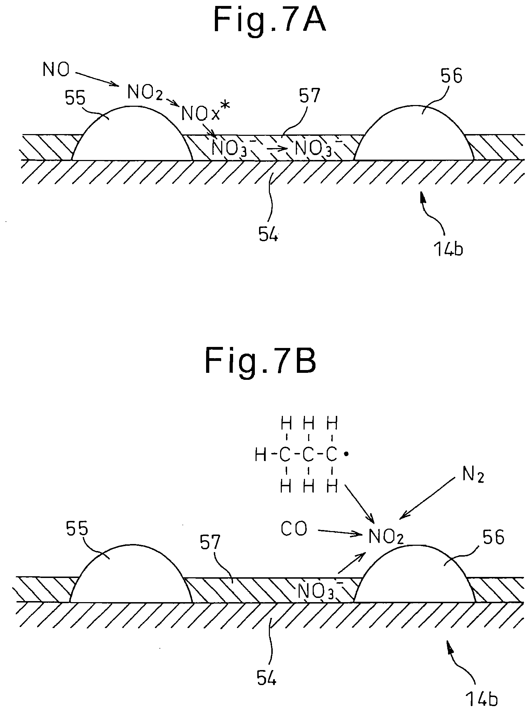

As mentioned above, if making the vibration period of the hydrocarbon concentration, that is, the feed period of the hydrocarbons HC, longer than the predetermined range of period, at the downstream side catalyst 14b, the active NOₓ*, as shown in FIG. 7A, will diffuse in the form of nitrate ions NO₃⁻ inside the basic layer 57 and become nitrates. That is, at this time, the NOₓ in the exhaust gas is absorbed in the form of nitrates inside of the basic layer 57.

On the other hand, FIG. 7B shows the case when, in this way, NOₓ is absorbed in the form of nitrates inside the basic layer 57 and the air-fuel ratio of the exhaust gas which flows into the exhaust purification catalyst 13 is made the stoichiometric air-fuel ratio or rich. In this case, the oxygen concentration in the exhaust gas falls, so the reaction proceeds in the opposite direction (NO₃⁻→NO₂), and consequently the nitrates absorbed in the basic layer 57 become nitrate ions NO₃⁻ one by one and, as shown in FIG. 7B, are released from the basic layer 57 in the form of NO₂. Next, the released NO₂ is reduced by the hydrocarbons HC and CO contained in the exhaust gas.

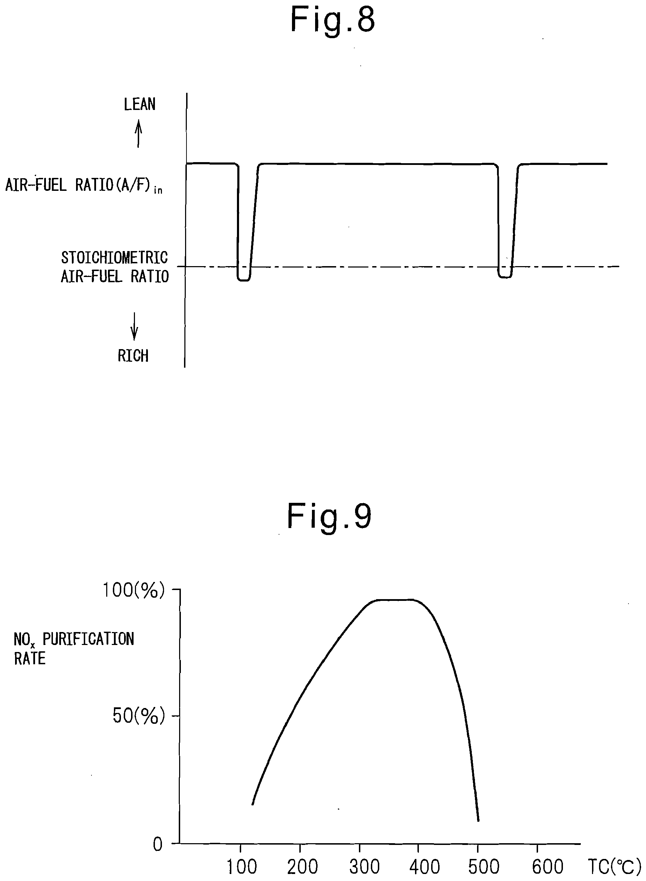

FIG. 8 shows the case of making the air-fuel ratio (A/F)in of the exhaust gas which flows into the exhaust purification catalyst 13 temporarily rich slightly before the NOₓ absorption ability of the basic layer 57 becomes saturated. Note that, in the example shown in FIG. 8, the time interval of this rich control is 1 minute or more. In this case, the NOₓ which was absorbed in the basic layer 57 when the air-fuel ratio (A/F)in of the exhaust gas was lean is released all at once from the basic layer 57 and reduced when the air-fuel ratio (A/F)in of the exhaust gas is made temporarily rich. Therefore, in this case, the basic layer 57 plays the role of an absorbent for temporarily absorbing NOₓ.

Note that, at this time, sometimes the basic layer 57 temporarily adsorbs the NOₓ. Therefore, if using term of storage as a term including both absorption and adsorption, at this time, the basic layer 57 performs the role of an NOₓ storage agent for temporarily storing the NOₓ. That is, in this case, if referring to the ratio of air and fuel (hydrocarbons) which are fed into the engine intake passage, combustion chambers 2, and exhaust passage upstream of the upstream-side catalyst 14a as the air-fuel ratio of the exhaust gas, the exhaust purification catalyst 13 functions as an NOₓ storage catalyst which stores the NOₓ when the air-fuel ratio of the exhaust gas is lean and releases the stored NOₓ when the oxygen concentration in the exhaust gas falls.

FIG. 9 shows the NOₓ purification rate when making the exhaust purification catalyst 13 function as an NOₓ storage catalyst in this way. Note that, the abscissa of the FIG. 9 shows the catalyst temperature TC of the downstream-side catalyst 14b. When making the exhaust purification catalyst 13 function as an NOₓ storage catalyst, as shown in FIG. 9, when the catalyst temperature TC is 300°C to 400°C, an extremely high NOₓ purification rate is obtained, but when the catalyst temperature TC becomes a 400°C or higher high temperature, the NOₓ purification rate falls.

In this way, when the catalyst temperature TC becomes 400°C or more, the NOₓ purification rate falls because if the catalyst temperature TC becomes 400°C or more, the nitrates break down by heat and are released in the form of NO₂ from the exhaust purification catalyst 13. That is, so long as storing NOₓ in the form of nitrates, when the catalyst temperature TC is high, it is difficult to obtain a high NOₓ purification rate. However, in the new NOₓ purification method shown from FIG. 4 to FIGS. 6Aand 6B, as will be understood from FIGS. 6A and 6B, nitrates are not formed or even if formed are extremely fine in amount, consequently, as shown in FIG. 5, even when the catalyst temperature TC is high, a high NOₓ purification rate is obtained.

Therefore, in a first embodiment according to the present invention, an exhaust purification catalyst 13 for reacting NOₓ contained in exhaust gas and reformed hydrocarbons is arranged inside of an engine exhaust passage, the exhaust purification catalyst 13 is comprised of an upstream-side catalyst 14a and downstream-side catalyst 14b arranged in series, the upstream side catalyst 14a is comprised of a three-way catalyst which has an oxygen storage ability, precious metal catalysts 51 and 52 are carried on the surface of the exhaust gas flow surface of the downstream side catalyst 14b, and a basic exhaust gas flow surface part 54 is formed around the precious metal catalysts 51 and 52, the exhaust purification catalyst 13 has the property of reducing the NOₓ which is contained in exhaust gas if the concentration of hydrocarbons which flow into the exhaust purification catalyst 13 is made to vibrate by within a predetermined range of amplitude and within a predetermined range of period and has the property of being increased in storage amount of NOₓ which is contained in exhaust gas if the vibration period of the hydrocarbon concentration is made longer than this predetermined range, and, at the time of engine operation, the concentration of hydrocarbons which flow into the exhaust purification catalyst 13 is made to vibrate by within the predetermined range of amplitude and within the predetermined range of period to thereby reduce the NOₓ which is contained in the exhaust gas in the exhaust purification catalyst 13.

That is, the NOₓ purification method which is shown from FIG. 4 to FIGS. 6A and 6B can be said to be a new NOₓ purification method designed to remove NOₓ without forming almost any nitrates in the case of using an exhaust purification catalyst which carries a precious metal catalyst and forms a basic layer which can absorb NOₓ. In actuality, when using this new NOₓ purification method, the nitrates which are detected from the basic layer 57 become much smaller in amount compared with the case where making the exhaust purification catalyst 13 function as an NOₓ storage catalyst. Note that, this new NOₓ purification method will be referred to below as the first NOₓ purification method.

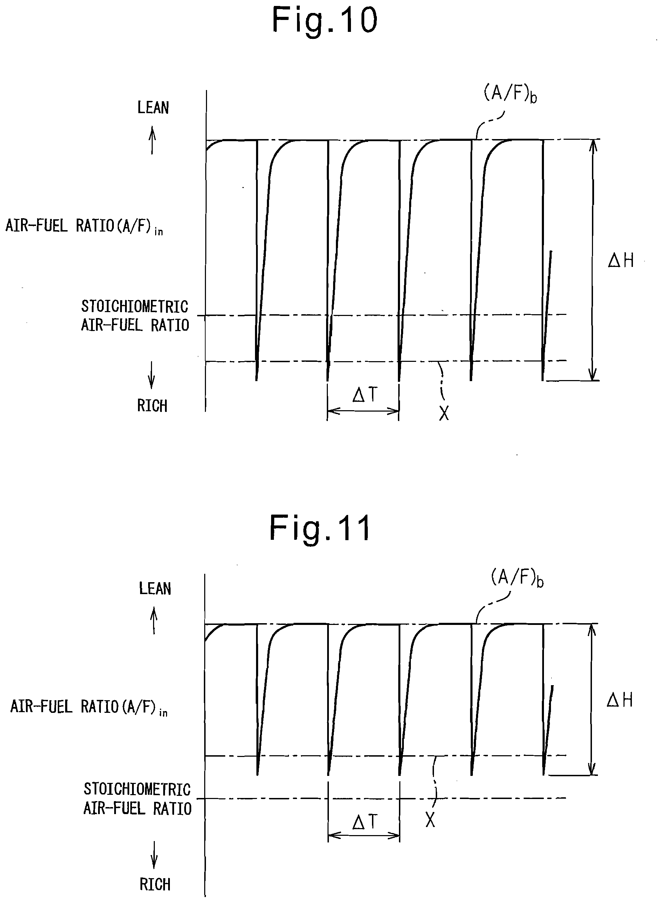

Next, referring to FIG. 10 to FIG. 15, this first NOₓ purification method will be explained in a bit more detail.

FIG. 10 shows enlarged the change in the air-fuel ratio (A/F)in shown in FIG. 4. Note that, as explained before, the change of the air-fuel ratio (A/F)in of the exhaust gas which flows into the exhaust purification catalyst 13 simultaneously shows the change in the concentration of hydrocarbons which flow into the exhaust purification catalyst 13. Note that, in FIG. 10, ΔH shows the amplitude of the change in concentration of hydrocarbons HC which flow into the exhaust purification catalyst 13, while ΔT shows the vibration period of the concentration of the hydrocarbons which flow into the exhaust purification catalyst 13.

Furthermore, in FIG. 10, (A/F)b shows the base air-fuel ratio which shows the air-fuel ratio of the combustion gas for generating the engine output. In other words, this base air-fuel ratio (A/F)b shows the air-fuel ratio of the exhaust gas which flows into the exhaust purification catalyst 13 when stopping the feed of hydrocarbons. On the other hand, in FIG. 10, X shows the upper limit of the air-fuel ratio (A/F)in by which it is possible to produce a sufficient amount of the reducing intermediate from the active NOₓ^{*} and reformed hydrocarbons and by which the active NOₓ^{*} can be made to react with the reducing intermediate without being stored in the basic layer 5 in the form of nitrates. To produce a sufficient amount of the reducing intermediate from the active NOₓ* and reformed hydrocarbons and make the active NOₓ* react with the reducing intermediate without being stored in the basic layer 5 in the form of nitrates, the air-fuel ratio (A/F)in has to be made lower than this upper limit X of the air-fuel ratio.

In other words, in FIG. 10, X shows the lower limit of the concentration of hydrocarbons required for producing a sufficient amount of reducing intermediate and for making the active NO_{X}* react with the reducing intermediate. To produce a sufficient amount of reducing intermediate and make the active NO_{X}* react with the reducing intermediate, the concentration of hydrocarbons has to be made higher than this lower limit X. In this case, whether a sufficient amount of the reducing intermediate is produced and whether the active NO_{X}* reacts with the reducing intermediate is determined by the ratio of the oxygen concentration and hydrocarbon concentration around the active NOₓ*, that is, the air-fuel ratio (A/F)in. The upper limit X of the air-fuel ratio required for producing the sufficient amount of reducing intermediate and reacting the active NO_{X}* reacts with the reducing intermediate will below be called the demanded minimum air-fuel ratio.

In the example shown in FIG. 10, the demanded minimum air-fuel ratio X is rich, therefore, in this case, to produce a sufficient amount of the reducing intermediate and make the active NO_{X}* react with the reducing intermediate, the air-fuel ratio (A/F)in is instantaneously made the demanded minimum air-fuel ratio X or less, that is, rich. As opposed to this, in the example shown in FIG. 11, the demanded minimum air-fuel ratio X is lean. In this case, the air-fuel ratio (A/F)in is maintained lean while periodically reducing the air-fuel ratio (A/F)in so a sufficient amount of the reducing intermediate is produced and the active NO_{X}* is made to react with the reducing intermediate.

In this case, whether the demanded minimum air-fuel ratio X becomes rich or becomes lean depends on the oxidizing strength of the upstream-side catalyst 14a. In this case, the upstream-side catalyst 14a, for example, becomes stronger in oxidizing strength if increasing the carried amount of the precious metal 51 and becomes stronger in oxidizing strength if strengthening the acidity. Therefore, the oxidizing strength of the upstream-side catalyst 14a changes due to the carried amount of the precious metal 51 or the strength of the acidity.

Now, if using an upstream-side catalyst 14a with a strong oxidizing strength, as shown in FIG. 11, if maintaining the air-fuel ratio (A/F)in lean while periodically lowering the air-fuel ratio (A/F)in, the hydrocarbons end up becoming completely oxidized when the air-fuel ratio (A/F)in is reduced. As a result, the reducing intermediate can no longer be produced. As opposed to this, when using an upstream-side catalyst 14a with a strong oxidizing strength, as shown in FIG. 10, if making the air-fuel ratio (A/F)in periodically rich, when the air-fuel ratio (A/F)in is made rich, the hydrocarbons will be partially oxidized, without being completely oxidized, that is, the hydrocarbons will be reformed, consequently the reducing intermediate will be produced and the active NO_{X}* will react with the reducing intermediate. Therefore, when using an upstream-side catalyst 14a with a strong oxidizing strength, the demanded minimum air-fuel ratio X has to be made rich.

On the other hand, when using an upstream-side catalyst 14a with a weak oxidizing strength, as shown in FIG. 11, if maintaining the air-fuel ratio (A/F)in lean while periodically lowering the air-fuel ratio (A/F)in, the hydrocarbons will be partially oxidized without being completely oxidized, that is, the hydrocarbons will be reformed and consequently a sufficient amount of reducing intermediate will be produced and the active NO_{X}* will be made to react with the reducing intermediate. As opposed to this, when using an upstream-side catalyst 14a with a weak oxidizing strength, as shown in FIG. 10, if making the air-fuel ratio (A/F)in periodically rich, a large amount of hydrocarbons will be exhausted from the upstream-side catalyst 14a without being oxidized and consequently the amount of hydrocarbons which is wastefully consumed will increase. Therefore, when using an upstream-side catalyst 14a with a weak oxidizing strength, the demanded minimum air-fuel ratio X has to be made lean.

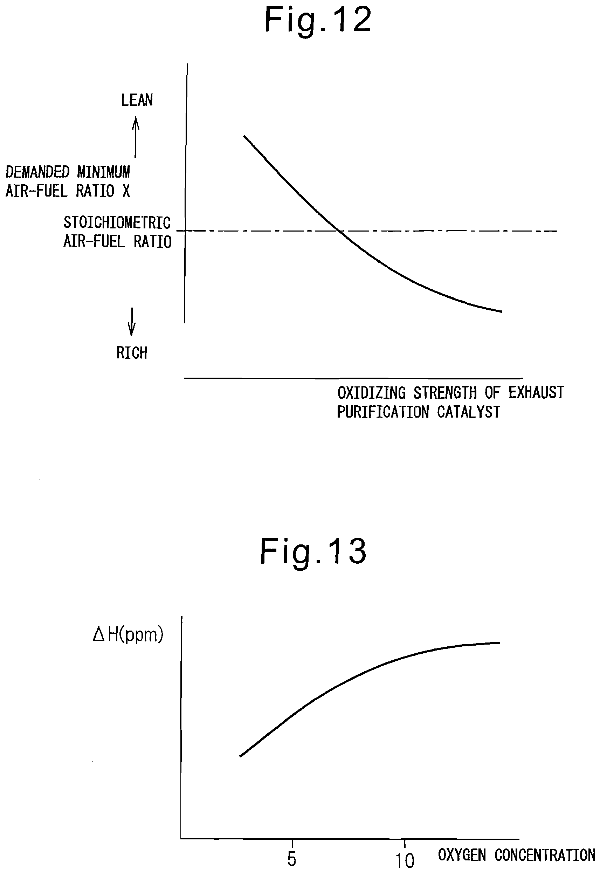

That is, it is learned that the demanded minimum air-fuel ratio X, as shown in FIG. 12, has to be lowered the stronger the oxidizing strength of the upstream-side catalyst 14a. In this way, the demanded minimum air-fuel ratio X becomes lean or rich due to the oxidizing strength of the upstream-side catalyst 14a. Below, taking as example the case where the demanded minimum air-fuel ratio X is rich, the amplitude of the change in concentration of hydrocarbons flowing into the exhaust purification catalyst 13 and the vibration period of the concentration of hydrocarbons flowing into the exhaust purification catalyst 13 will be explained.

Now, if the base air-fuel ratio (A/F)b becomes larger, that is, if the oxygen concentration in the exhaust gas before the hydrocarbons are fed becomes higher, the feed amount of hydrocarbons required for making the air-fuel ratio (A/F)in the demanded minimum air-fuel ratio X or less increases.Therefore, the higher the oxygen concentration in the exhaust gas before the hydrocarbons are fed, the larger the amplitude of the hydrocarbon concentration has to be made.

FIG. 13 shows the relationship between the oxygen concentration in the exhaust gas before the hydrocarbons are fed and the amplitude ΔH of the hydrocarbon concentration when the same NOₓ purification rate is obtained. From FIG. 13, it is learned that to obtain the same NOₓ purification rate, the higher the oxygen concentration in the exhaust gas before the hydrocarbons are fed, the greater the amplitude ΔH of the hydrocarbon concentration has to be made. That is, to obtain the same NOₓ purification rate, the higher the base air-fuel ratio (A/F)b, the greater the amplitude ΔT of the hydrocarbon concentration has to be made. In other words, to remove the NOₓ well, the lower the base air-fuel ratio (A/F)b, the more the amplitude ΔT of the hydrocarbon concentration can be reduced.

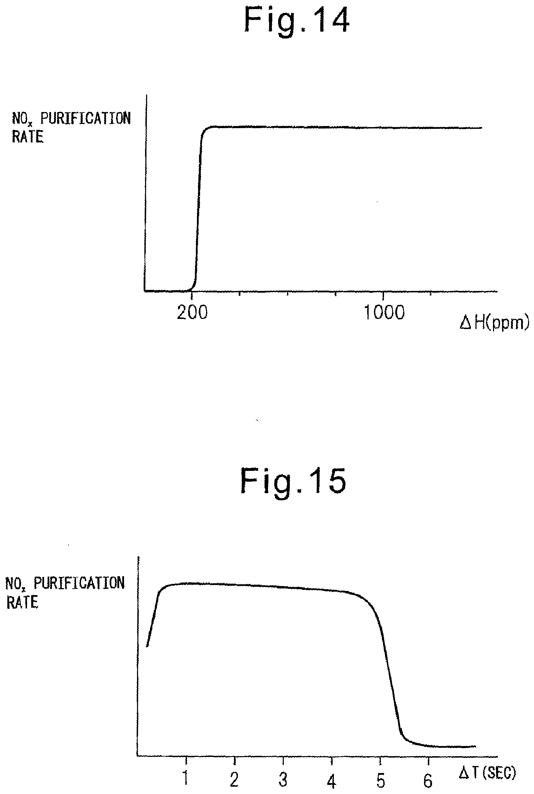

In this regard, the base air-fuel ratio (A/F)b becomes the lowest at the time of an acceleration operation. At this time, if the amplitude ΔH of the hydrocarbon concentration is about 200 ppm, it is possible to remove the NOₓ well. The base air-fuel ratio (A/F)b is normally larger than the time of acceleration operation. Therefore, as shown in FIG. 14, if the amplitude ΔH of the hydrocarbon concentration is 200 ppm or more, an excellent NOₓ purification rate can be obtained.

On the other hand, it is learned that when the base air-fuel ratio (A/F)b is the highest, if making the amplitude ΔH of the hydrocarbon concentration 10000 ppm or so, an excellent NOₓ purification rate is obtained. Therefore, in the present invention, the predetermined range of the amplitude of the hydrocarbon concentration is made 200 ppm to 10000 ppm.

Further, if the vibration period ΔT of the hydrocarbon concentration becomes longer, the oxygen concentration around the active NO_{X}* becomes higher in the time after the hydrocarbons are fed to when the hydrocarbons are next fed. In this case, if the vibration period ΔT of the hydrocarbon concentration becomes longer than about 5 seconds, the majority of the active NO_{X}* starts to be absorbed in the form of nitrates inside the basic layer 57. Therefore, as shown in FIG. 15, if the vibration period ΔT of the hydrocarbon concentration becomes longer than about 5 seconds, the NOₓ purification rate falls. Therefore, the vibration period ΔT of the hydrocarbon concentration has to be made 5 seconds or less.

On the other hand, if the vibration period ΔT of the hydrocarbon concentration becomes about 0.3 second or less, the fed hydrocarbons start to build up on the exhaust purification catalyst 13, therefore, as shown in FIG. 15, if the vibration period ΔT of the hydrocarbon concentration becomes about 0.3 second or less, the NOₓ purification rate falls. Therefore, in the present invention, the vibration period of the hydrocarbon concentration is made from 0.3 second to 5 seconds.

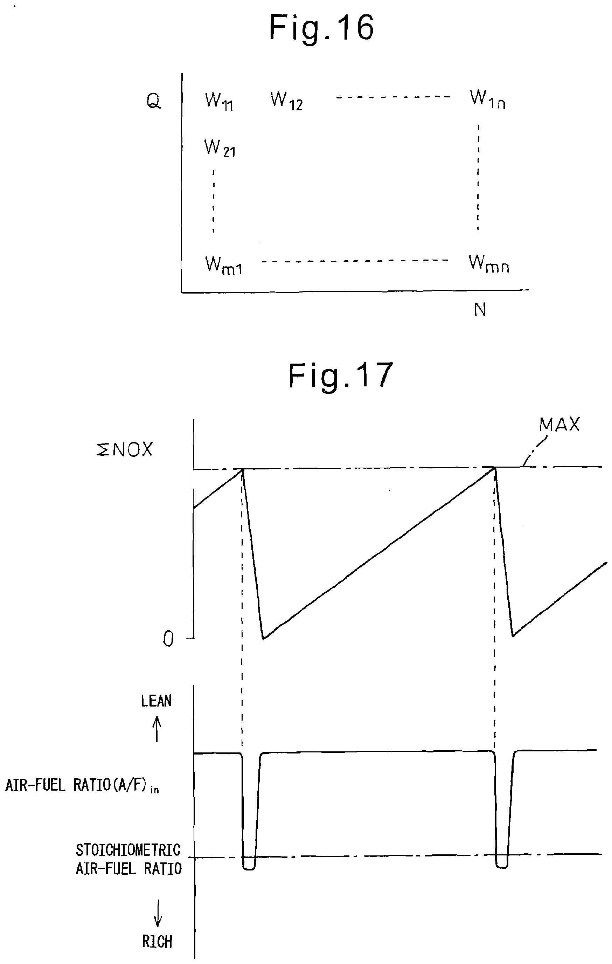

Now, in the present invention, the hydrocarbon feed amount and injection timing from the hydrocarbon feed valve 15 are made to change so as to control the amplitude ΔH and vibration period ΔT of the hydrocarbon concentration to become the optimum values in accordance with the engine operating state. In this case, in this embodiment of the present invention, the hydrocarbon feed amount W able to give the optimum amplitude ΔH of the hydrocarbon concentration is stored as a function of the injection amount Q from the fuel injector 3 and engine speed N in the form of a map such as shown in FIG. 16 in advance in the ROM 32. Further, the optimum vibration amplitude ΔT of the hydrocarbon concentration, that is, the injection period ΔT of the hydrocarbons is similarly stored as a function of the injection amount Q and engine speed N in the form of a map in advance in the ROM 32.

Next, referring to FIG. 17 to FIG. 20, an NOₓ purification method in the case when making the exhaust purification catalyst 13 function as an NOₓ storage catalyst will be explained in detail. The NOₓ purification method in the case when making the exhaust purification catalyst 13 function as an NOₓ storage catalyst in this way will be referred to below as the second NOₓ purification method.

In this second NOₓ purification method, as shown in FIG. 17, when the stored NOₓ amount ΣNOₓ which is stored in the basic layer 57 exceeds a predetermined allowable amount MAX, the air-fuel ratio (A/F)in of the exhaust gas which flows into the exhaust purification catalyst 13 is temporarily made rich. If the air-fuel ratio (A/F)in of the exhaust gas is made rich, the NOₓ which was stored in the basic layer 53 when the air-fuel ratio (A/F)in of the exhaust gas was lean is released from the basic layer 53 all at once and reduced. Due to this, the NOₓ is removed.

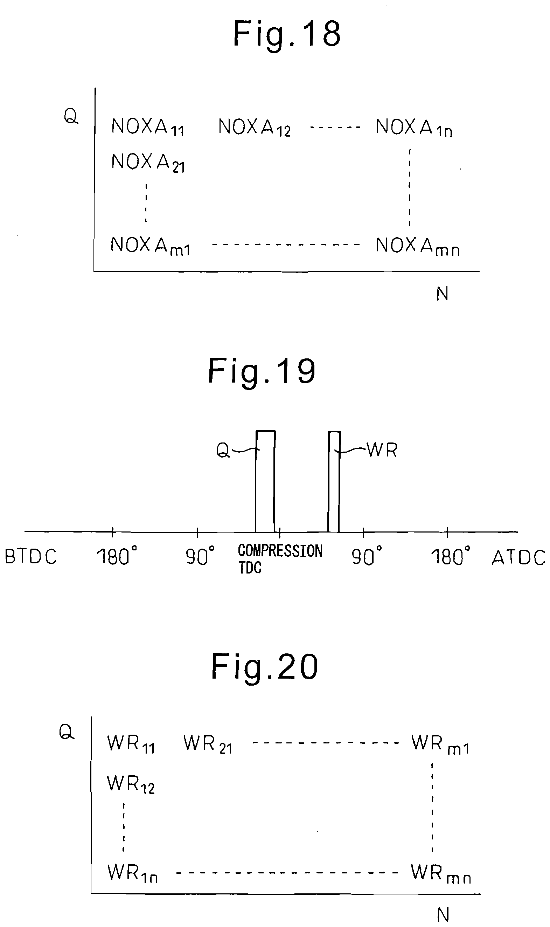

The stored NOₓ amount ΣNOX is, for example, calculated from the amount of NOₓ which is exhausted from the engine. In this embodiment according to the present invention, the exhausted NOₓ amount NOXA of NOₓ which is exhausted from the engine per unit time is stored as a function of the injection amount Q and engine speed N in the form of a map such as shown in FIG. 18 in advance in the ROM 32. The stored NOₓ amount ΣNOX is calculated from exhausted NOₓ amount NOXA. In this case, as explained before, the period during which the air-fuel ratio (A/F)in of the exhaust gas is made rich is usually 1 minute or more.

In this second NOₓ purification method, as shown in FIG. 19, the fuel injector 3 injects additional fuel WR into the combustion chamber 2 in addition to the combustion-use fuel Q so that the air-fuel ratio (A/F) in of the exhaust gas flowing to the exhaust purification catalyst 13 is made rich. Note that, in FIG. 19, the abscissa indicates the crank angle. This additional fuel WR is injected at a timing at which it will burn, but will not appear as engine output, that is, slightly before ATDC90° after compression top dead center. This fuel amount WR is stored as a function of the injection amount Q and engine speed N in the form of a map such as shown in FIG. 20 in advance in the ROM 32. Of course, in this case, it is also possible to make the amount of feed of hydrocarbons from the hydrocarbon feed valve 15 increase so as to make the air-fuel ratio (A/F)in of the exhaust gas rich.

Now, to remove well the NO_{X} which is exhausted from the engine, it is necessary to increase the amount of feed of hydrocarbons the more then amount of NO_{X} which is exhausted from the engine increases. In this regard, if the amount of feed of hydrocarbons is increased in this way, the air-fuel ratio of the exhaust gas (A/F)in which flows into the exhaust purification catalyst 13 will become lean close to the stoichiometric air-fuel ratio or will become rich. As a result, the concentration of oxygen in the exhaust gas will become lower, so a partial oxidation reaction of the hydrocarbons will become difficult and therefore the reducing intermediate will become hard to produce.

However, in the present invention, the upstream side catalyst 14a is formed from a three-way catalyst which has an oxygen storage ability, so even if the oxygen concentration of the exhaust gas falls, oxygen is released from the upstream side catalyst 14a and, as a result, the partial oxidation reaction of the hydrocarbons is actively performed. Therefore, even if the amount of feed of the hydrocarbons increases, a sufficient amount of reducing intermediate is produced and the active NO_{X}* is made to sufficiently react with the reducing intermediate, so a good NO_{X} purification rate can be secured.

If, in this way, the upstream side catalyst 14a is formed from a three-way catalyst which has an oxygen storage ability, if making the amplitude of the concentration of hydrocarbons greater, that is, if making the peak concentration of the hydrocarbons higher when the concentration of NO_{X} exhausted from the engine becomes higher, it would be possible to remove the NO_{X} well. Therefore, in the present invention, when the engine is in an operating state where the concentration of NO_{X} which is exhausted from the engine becomes higher, the peak concentration of the vibrating hydrocarbon concentration is made higher.

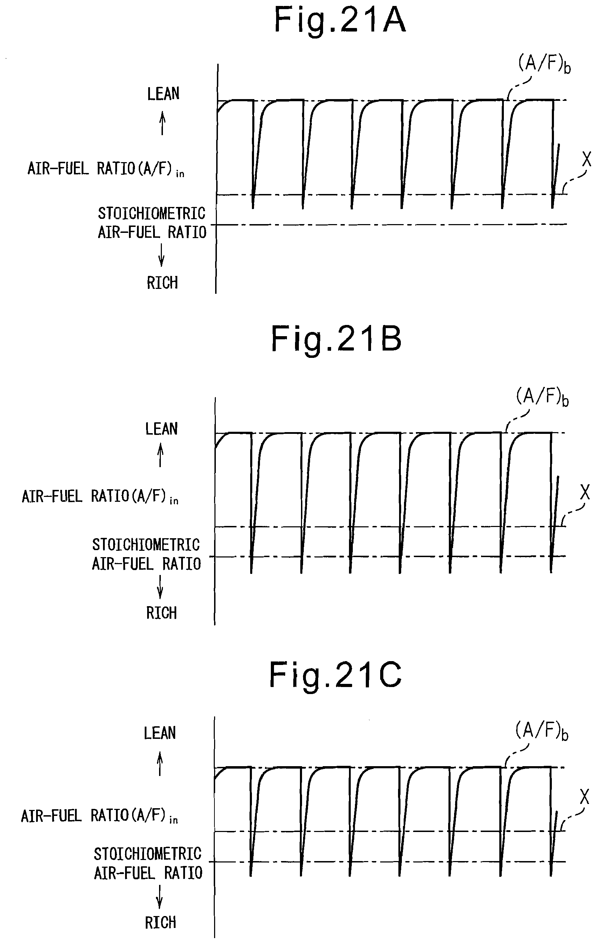

Explained specifically, in case where, if, for example, hydrocarbons are fed by the amount of feed W which is calculated based on FIG. 16, when in the engine operating state where the concentration of NOₓ which is exhausted from the engine becomes higher, the peak value of the air-fuel ratio of the exhaust gas (A/F)in would become considerably lean as shown in FIG. 21A, the amount of injection of hydrocarbons per operation is made to increase as shown in FIG. 21B, so that the peak concentration of the hydrocarbon concentration becomes higher or, as shown in FIG. 21C, the base air-fuel ratio (A/F)b is made the rich side so that the peak concentration of the hydrocarbon concentration becomes higher.

Note that, the concentration of NO_{X} which is exhausted from the engine becomes higher at the time of acceleration operation or at the time of high load operation. Therefore, in an embodiment of the present invention, when the engine operating state is that of acceleration operation or high load operation, the peak concentration of the vibrating hydrocarbon concentration is made higher.

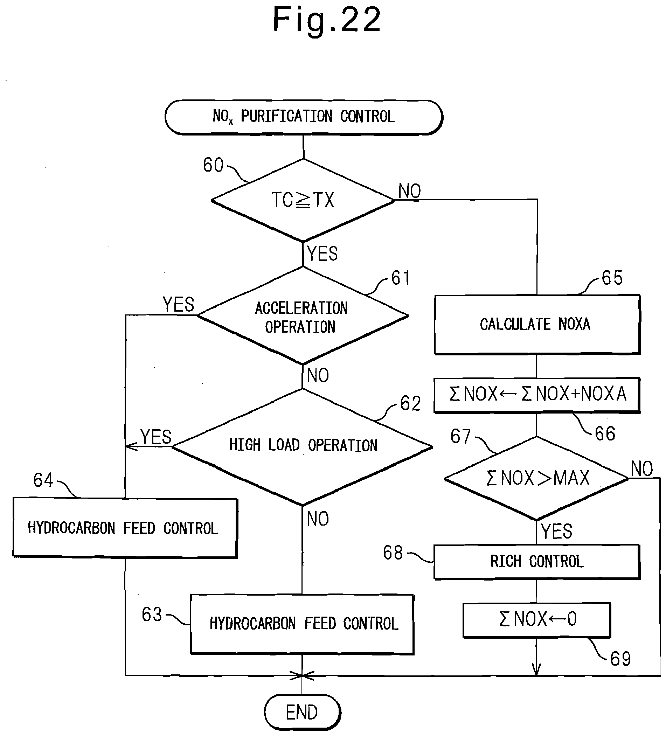

FIG. 22 shows the NOₓ purification control routine. This routine is executed by interruption every constant time.

Referring to FIG. 22, first, at step 60, it is judged from the output signal of the temperature sensor 23 if the temperature TC of the downstream-side catalyst 14b exceeds the activation temperature TX. When TC≥TX, that is, when the downstream-side catalyst 14b is activated, the routine proceeds to step 61 where it is judged if the operating state is that of the time of an acceleration operation. If not an acceleration operation, the routine proceeds to step 62, where it is judged if the operating state is that of the time of a high load operation. When not of the time of a high load operation, the routine proceeds to step 63, where the amount of feed W which is calculated from FIG. 16 is used for control of the feed of hydrocarbons from the hydrocarbon feed valve 15. At this time, the NOₓ purification action is performed by the first NOₓ purification method.

As opposed to this, when it is judged at step 61 that the operating state is the time of acceleration operation or when it is judged at step 62 that the operating state is the time of a high load operation, the routine proceeds to step 64 where the peak concentration of hydrocarbons which flow into the exhaust purification catalyst 13 is made higher. At this time, even if the concentration of NOₓ which is exhausted from the engine is high, a good NOₓ purification action is performed by the first NOₓ purification method.

On the other hand, when it is judged at step 60 that TC<TX, it is judged that the second NOₓ purification method should be used, then the routine proceeds to step 65. At step 65, the NOₓ amount NOXA of the NOₓ exhausted per unit time is calculated from the map shown in FIG. 18. Next, at step 66, ΣNOₓ is increased by the exhausted NOₓ amount NOXA to calculate the stored NOₓ amount ΣNOₓ. Next, at step 67, it is judged if the stored NOₓ amount ΣNOₓ exceeds the allowable value MAX. When ΣNOₓ>MAX, the routine proceeds to step 68 where the additional fuel amount WR is calculated from the map shown in FIG. 20 and an injection action of the additional fuel is performed. Next, at step 68, ΣNOₓ is cleared.

### Reference Signs List

- 4: intake manifold
- 5: exhaust manifold
- 7: exhaust turbocharger
- 12: exhaust pipe
- 13: exhaust purification catalyst
- 14a: upstream-side catalyst
- 14b: downstream-side catalyst
- 15: hydrocarbon feed valve

## Claims

1. NOx purification method of an exhaust purification system of an internal combustion engine (1) in which an exhaust purification catalyst (13) for reacting. NOₓ contained in exhaust gas and reformed hydrocarbons is arranged inside of an engine exhaust passage, the exhaust purification catalyst (13) is comprised of an upstream side catalyst (14a) and downstream side catalyst (14b) arranged in series, the upstream side catalyst (14a) is comprised of a three-way catalyst which has an oxygen storage ability, a precious metal catalyst (55, 56) is carried on the surface of the exhaust gas flow surface of the downstream side catalyst (14b), and a basic exhaust gas flow surface part (58) is formed around the precious metal catalyst (55, 56), the exhaust purification catalyst (13) reducing the NOₓ which is contained in exhaust gas if the concentration of hydrocarbons which flow into the exhaust purification catalyst (13) is made to vibrate by within a predetermined range of amplitude and within a predetermined range of period, and being increased in storage amount of NOₓ which is contained in exhaust gas if the vibration period of the hydrocarbon concentration is made longer than the predetermined range, and, at the time of engine operation, the concentration of hydrocarbons which flow into the exhaust purification catalyst (13) is made to vibrate by within the predetermined range of amplitude and within the predetermined range of period to thereby reduce the NOₓ which is contained in the exhaust gas in the exhaust purification catalyst (13), **characterized in that** when in an engine operating state where a concentration of NO_{X} which is exhausted from the engine (1) increases, a peak concentration of the vibrating hydrocarbon concentration is increased.

2. NOx purification method of an exhaust purification system of an internal combustion engine (1) as claimed in claim 1, wherein the engine operating state where the concentration of NO_{X} which is exhausted from the engine (1) increases is a time of acceleration operation and high load operation and, when at the time of acceleration operation or high load operation, the peak concentration of the vibrating hydrocarbon concentration is increased.

3. NOx purification method of an exhaust purification system of an internal combustion engine (1) as claimed in claim 1, wherein the vibration period of said hydrocarbon concentration is from 0.3 second to 5 seconds.

4. NOx purification method of an exhaust purification system of an internal combustion engine (1) as claimed in claim 1, wherein the precious metal catalyst (55, 56) is comprised of platinum Pt and at least one of rhodium Rh and palladium Pd.

5. NOx purification method of an exhaust purification system of an internal combustion engine (1) as claimed in claim 1, wherein on the exhaust gas flow surface, a basic layer (57) including an alkali metal or an alkali earth metal or rare earth or metal able to donate electrons to the NOₓ is formed, and a surface of the basic layer (57) forms said basic exhaust gas flow surface part (58).

6. NOx purification method of an exhaust purification system of an internal combustion engine (1) as claimed in claim 1, wherein a precious metal catalyst (51, 52) is carried on a catalyst carrier (50) of the three-way catalyst, and the catalyst carrier (50) contains cerium Ce.

## Patentansprüche

1. NOₓ-Reinigungsverfahren eines Abgasreinigungssystems einer Verbrennungskraftmaschine (1), bei dem ein Abgasreinigungskatalysator (13) zum Reagieren von in dem Abgas enthaltenen NOₓ und reformierten Kohlenwasserstoffen im Inneren eines Maschinen-Abgastrakts angeordnet ist, der Abgasreinigungskatalysator (13) aus einem stromaufwärtsseitigen Katalysator (14a) und einem stromabwärtsseitigen Katalysator (14b) besteht, die in Reihe angeordnet sind, wobei der stromaufwärtsseitige Katalysator (14a) aus einem Drei-Wege-Katalysator besteht, der eine Sauerstoffspeicherfähigkeit aufweist, ein Edelmetallkatalysator (55, 56) auf der Oberfläche der Abgasströmungsoberfläche des stromabwärtsseitigen Katalysators (14b) getragen ist, und ein basisches Abgasströmungsoberflächenteil (58) um den Edelmetallkatalysator (55, 56) herum ausgebildet ist, wobei der Abgasreinigungskatalysator (13) das in dem Abgas enthaltene NOₓ reduziert, falls die Konzentration an Kohlenwasserstoffen, die in den Abgasreinigungskatalysator (13) strömen, veranlasst wird, innerhalb eines vorgegebenen Amplitudenbereichs und innerhalb eines vorgegebenen Periodenbereichs zu schwingen, und wobei die Speichermenge an in dem Abgas enthaltenem NOₓ erhöht wird, falls die Schwingungsperiode der Konzentration an Kohlenwasserstoffen über den vorgegebenen Bereich hinaus verlängert wird, und wobei, während die Maschine in Betrieb ist, die Konzentration an Kohlenwasserstoffen, die in den Abgasreinigungskatalysator (13) strömen, veranlasst wird, innerhalb des vorgegebenen Amplitudenbereichs und innerhalb des vorgegebenen Periodenbereichs zu schwingen, um dadurch das in dem Abgas enthaltene NOₓ in dem Abgasreinigungskatalysator (13) zu reduzieren, **dadurch gekennzeichnet, dass**, wenn in einem Betriebszustand der Maschine, bei dem eine Konzentration an NOₓ, das aus der Maschine (1) ausgestoßen wird, zunimmt, eine Spitzenkonzentration der schwingenden Konzentration an Kohlenwasserstoffen erhöht wird.

2. NOₓ-Reinigungsverfahren eines Abgasreinigungssystems einer Verbrennungskraftmaschine (1) nach Anspruch 1, wobei der Maschinen-Betriebszustand, bei dem die Konzentration an NOₓ, das aus der Maschine (1) ausgestoßen wird, zunimmt, ein Zeitpunkt eines Beschleunigungsvorgangs und ein Hochlastvorgang ist, und ein Zeitpunkt ist, bei dem während des Beschleunigungsvorgangs oder Hochlastvorgangs die Spitzenkonzentration der schwingenden Kohlenwasserstoff-Konzentration zunimmt.

3. NOₓ-Reinigungsverfahren eines Abgasreinigungssystems einer Verbrennungskraftmaschine (1) nach Anspruch 1, wobei die Schwingungsperiode der Konzentration an Kohlenwasserstoffen zwischen 0,3 und 5 Sekunden liegt.

4. NOₓ-Reinigungsverfahren eines Abgasreinigungssystems einer Verbrennungskraftmaschine (1) nach Anspruch 1, wobei der Edelmetallkatalysator (55, 56) aus Platin Pt und zumindest einem von Rhodium Rh und Palladium Pd besteht.

5. NOₓ-Reinigungsverfahren eines Abgasreinigungssystems einer Verbrennungskraftmaschine (1) nach Anspruch 1, wobei auf der Abgasströmungsoberfläche eine basische Schicht (57) ausgebildet ist, die ein Alkalimetall oder ein Erdalkalimetall oder eine seltene Erde oder ein Metall, das an das NOₓ Elektronen abgeben kann, enthält, und eine Oberfläche der basischen Schicht (57) das basische Abgasströmungsoberflächenteil (58) bildet.

6. NOₓ-Reinigungsverfahren eines Abgasreinigungssystems einer Verbrennungskraftmaschine (1) nach Anspruch 1, wobei ein Edelmetallkatalysator (51, 52) auf einem Katalysatorträger (50) des Drei-Wege-Katalysators getragen ist, und wobei der Katalysatorträger (50) Cer Ce enthält.

## Revendications

1. Procédé de purification de NOx d'un système de purification d'échappement d'un moteur à combustion interne (1) dans lequel un catalyseur de purification (13) pour faire réagir NOx contenu dans des gaz d'échappement et des hydrocarbures réformés est disposé à l'intérieur d'un passage d'échappement de moteur, le catalyseur de purification d'échappement (13) est constitué d'un catalyseur sur le côté amont (14a) et d'un catalyseur sur le côté aval (14b) disposés en séries, le catalyseur sur le côté amont (14a) est constitué d'un catalyseur trois voies qui présente une aptitude au stockage d'oxygène, un catalyseur de métal précieux (55, 56) est supporté sur la surface d'écoulement de gaz d'échappement du catalyseur sur le côté aval (14b), et une partie de surface d'écoulement de gaz d'échappement basique (58) est formée autour du catalyseur de métal précieux (55, 56), le catalyseur de purification d'échappement (13) réduisant le NOx qui est contenu dans des gaz d'échappement si la concentration en hydrocarbures qui s'écoulent dans le catalyseur de purification d'échappement (13) est amené à osciller dans un intervalle prédéterminé d'amplitude et dans un intervalle prédéterminé de période, et étant augmenté en quantité de stockage NOx qui est contenu dans des gaz d'échappement si la période d'oscillation de la concentration en hydrocarbures est rendue plus longue que l'intervalle prédéterminé, et, au moment du fonctionnement du moteur, la concentration en hydrocarbures qui s'écoulent dans le catalyseur de purification d'échappement (13) est amenée à osciller dans l'intervalle prédéterminé d'amplitude et dans l'intervalle prédéterminé de période pour réduire par là le NOx qui est contenu dans les gaz d'échappement dans le catalyseur de purification d'échappement (13), **caractérisé en ce que** lorsque dans un état de fonctionnement de moteur où une concentration en NOx qui est évacué du moteur (1) augmente, une concentration de pic de la concentration en hydrocarbures oscillante est augmentée.

2. Procédé de purification de NOx d'un système de purification d'échappement d'un moteur à combustion interne (1) selon la revendication 1, dans lequel l'état de fonctionnement du moteur où la concentration en NOx qui est évacué du moteur (1) augmente est un moment de fonctionnement d'accélération et un fonctionnement à charge élevée et, lorsqu'au moment du fonctionnement d'accélération ou du fonctionnement à charge élevée, la concentration de pic de la concentration en hydrocarbures oscillante est augmentée.

3. Procédé de purification de NOx d'un système de purification d'échappement d'un moteur à combustion interne (1) selon la revendication 1, dans lequel la période d'oscillation de ladite concentration en hydrocarbures est de 0,3 seconde à 5 secondes.

4. Procédé de purification de NOx d'un système de purification d'échappement d'un moteur à combustion interne (1) selon la revendication 1, dans lequel le catalyseur de métal précieux (55, 56) est constitué de platine Pt et d'au moins un du rhodium Rh et du palladium Pd.

5. Procédé de purification de NOx d'un système de purification d'échappement d'un moteur à combustion interne (1) selon la revendication 1, dans lequel sur la surface d'écoulement de gaz d'échappement, une couche basique (57) incluant un métal alcalin ou un métal alcalino-terreux ou une terre rare ou un métal apte à donner des électrons au NOx est formée, et une surface de la couche basique (57) forme ladite partie de surface d'écoulement de gaz d'échappement basique (58).

6. Procédé de purification de NOx d'un système de purification d'échappement d'un moteur à combustion interne (1) selon la revendication 1, dans lequel un catalyseur de métal précieux (51, 52) est supporté sur un support de catalyseur (50) du catalyseur à trois voies, et le support de catalyseur (50) contient du cérium Ce.
